(19) Europäisches Patentamt
European Patent Office
Office européen des brevets

(11) **EP 0 244 640 B1**

(12) **EUROPÄISCHE PATENTSCHRIFT**

(45) Veröffentlichungstag und Bekanntmachung des Hinweises auf die Patenterteilung:
**09.09.1998 Patentblatt 1998/37**

(51) Int Cl.[6]: **G02B 21/00**, G02B 21/06, G02B 27/46

(21) Anmeldenummer: **87104961.5**

(22) Anmeldetag: **03.04.1987**

(54) **Strahlungsmodulierendes Mikroskop mit Rückfaltung**

Light-modulating microscope using deconvolution

Microscope à faisceau modulé avec déconvolution

(84) Benannte Vertragsstaaten:
**AT CH DE FR GB IT LI NL SE**

(30) Priorität: **09.04.1986 US 850487**

(43) Veröffentlichungstag der Anmeldung:
**11.11.1987 Patentblatt 1987/46**

(73) Patentinhaber:
- **Firma Carl Zeiss**
  **D-73446 Oberkochen (DE)**
  Benannte Vertragsstaaten:
  **AT CH DE FR GB IT LI NL SE**
- **CARL ZEISS-STIFTUNG HANDELND ALS CARL ZEISS**
  **D-89518 Heidenheim (Brenz) (DE)**
  Benannte Vertragsstaaten:
  **GB**

(72) Erfinder: **Grosskopf, Rudolf, Dr.**
**D-7923 Königsbronn (DE)**

(56) Entgegenhaltungen:
**DE-A- 3 200 038**          **US-A- 2 660 923**

- **JOURNAL OF THE OPTICAL SOCIETY OF AMERICA A. OPTICS AND IMAGE SCIENCE, Band 2, Nr. 2, Februar 1985, Seiten 121-127, Optical Society of America, New York, US; N. STREIBL: "Three-dimensional imaging by a microscope"**

**Beschreibung**

Die Erfindung betrifft ein Abbildungsverfahren nach dem Oberbegriff des Anspruchs 1 und ein abbildendes System nach dem Oberbegriff des Anspruchs 3.

Im Mikroskop wird Licht von einer Lichtquelle ausgesandt und durch eine Kollektorlinse auf einen Punkt im Objekt fokussiert. Das Licht passiert dann ein Objektiv und eine Objektivaperturblende und wird in eine Ebene fokussiert, in der das Target einer Fernsehaufnahmeröhre sich befindet. Zwei z. B. parallele Lichtstrahlen ausgehend von einer Lichtquelle konvergieren in einem Objekt. Auf beiden Seiten des Objektes zwischen Kondensor und Objektiv bilden sie zwei Kegel (29a und 29b) (einen Doppelkegel). Bei Anwesenheit aller Lichtstrahlen gibt es typisch eine Million Doppelkegel fokussiert im Objekt.

Für transparente und schwach absorbierende Objekte, besonders in Medizin und Biologie, wird normalerweise ein Mikroskop im Durchlicht benutzt. Um Objekte sichtbar zu machen, sind die vier wichtigsten optischen Effekte: Absorption, Streuung, Phasenverschiebung und Fluoreszenz.

Die Rückfaltung, die hier beschrieben wird, kann für Objekte mit Absorption, Streuung, Gradienten des Brechungsindex und Fluoreszenz benutzt werden. Besonders wichtige praktische Anwendungen gibt es für Absorption und Streuung. Deshalb konzentriert sich die Darstellung in den meisten Beispielen auf Anwendung für absorbierende und streuende Objekte.

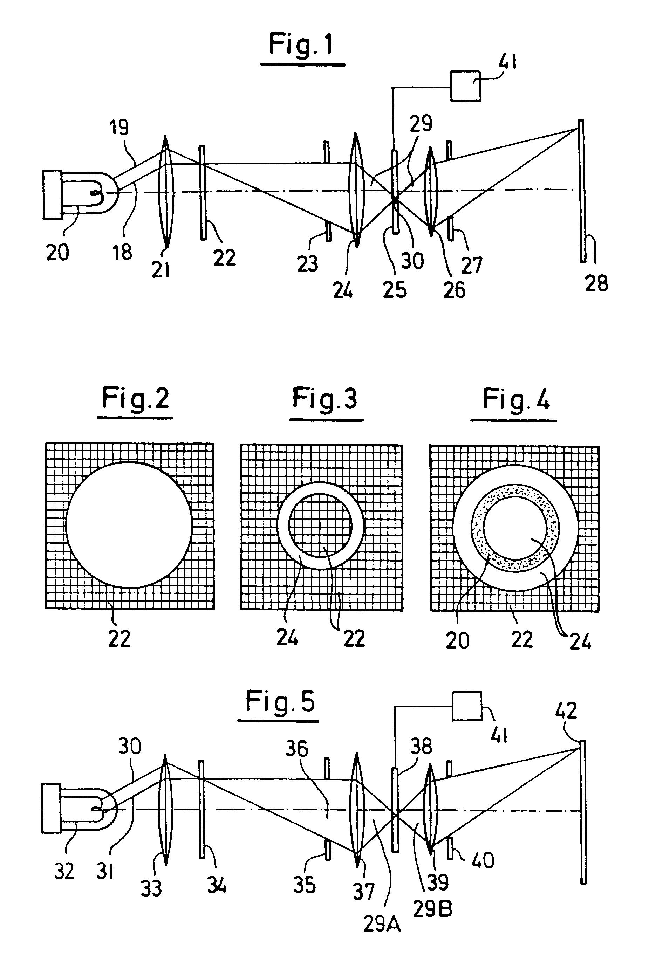

Fig. 1 zeigt ein System nach dem Stande der Technik, in dem ein Mikroskop Licht von einem lichtaussendenden Leuchtfaden (20) durch eine Kollektorlinse (21) sendet. Die Kollektorlinse sammelt das Licht, so daß parallele Strahlen, wie Strahl (18) und (19) entstehen, die einander in der Ebene der Leuchtfeldblende (22) schneiden. Das Licht geht dann durch eine Aperturblende 23. Die Kondensorlinse (24) fokussiert das Beleuchtungslicht auf ein Objekt 25, das zu vergrößern ist. Dieses Objekt ist typisch ein transparentes Objekt mit lichtabsorbierenden Gebieten und streuenden Gebieten wie biologische Zellen oder Gewebe. Diese Zellen oder Gewebe sind typischerweise auf eine als Objektträger dienende Glasscheibe aufgebracht und bedeckt mit einer anderen kleinen dünnen Glasscheibe. Die Anordnung wird dann Mikroskopobjekt oder Probe genannt. Das Licht, das von dem Objekt (25) nicht absorbiert wird, tritt in ein Objektiv (26) ein und passiert die Objektivaperturblende (27) und wird in eine Ebene projiziert, in der die lichtempfindliche Schicht (28) einer Fernsehkamera sich befindet. Die Fernsehkamera nimmt die Bilder vom Mikroskop auf. Ein normales Mikroskop hat am Ort (28) eine Blende und ein Binokular zur Betrachtung.

Eine wichtige Eigenart des Lichtweges ist gezeigt zwischen Kondensorlinse (24) und Objektiv (26). Das Licht zweier zuvor paralleler Strahlen, dargestellt als Linien (18) und (19), stammend vom Leuchtfaden (20), bildet einen Doppelkegel (29), der das Objekt (25) durchsetzt. Es gibt so viele Doppelkegel wie Bildpunkte in einem optischen Bild. Jeder der mehr als Hunderttausend, typisch eine Million Doppelkegel stammt von parallelem Licht, ursprünglich ausgesendet vom Leuchtfaden (20). Das Bild, das auf die Fernsehröhre (28) geworfen wird, ist eine Faltung mit dem Objekt (25). Wie in Fig. 1 gezeigt, bilden die Spitzen (30) der Doppelkegel eine Ebene. Nur die Einzelheiten des Objekts, die in dieser Ebene liegen, sind im Fokus und werden scharf abgebildet. Je weiter die Einzelheiten des Objekts von der Fokusebene entfernt sind, desto schlechter können Einzelheiten im Bild erkannt werden, das auf der Fernsehröhre entsteht.

Mikroskope nach dem Stande der Technik haben einen manuell bedienbaren Antrieb, der entweder das Objekt (25) oder das Objektiv (26) oder eine Linse im Objektiv in Richtung der Achse des Systems bewegt, um den Fokus auf aufeinanderfolgende Ebenen im Objekt einzustellen. Das Bild enthält jeweils nicht nur die Einzelheiten aus der Fokusebene sondern auch die defokussierten Einzelheiten anderer Teile des Objekts. Das führt zu ernsten Nachteilen, unter denen alle Lichtmikroskope leiden. Je dicker die Objekte sind, desto schlechter wird die Auflösung für Einzelheiten innerhalb der Fokusebene. Noch ungünstiger wird die Situation, wenn gefärbte Objekte viele Einzelheiten über ein großes Volumen verteilt enthalten.

Um dieses Problem zu beseitigen, werden in Biologie und Medizin Proben für Forschungszwecke in sehr dünne Schichten mit Mikrotomen geschnitten. Das ist eine zeitaufwendige Methode, die oftmals Kühlung oder Gefrieren des Objektes vor dem Schneiden bedingt. Sie kann nicht benutzt werden, um Bilder von lebenden Zellen zu erzeugen. Deshalb wurden schon Computer benutzt, um Folgen mikroskopischer Bilder rückzufalten, die von verschiedenen Fokusebenen schrittweise aufgenommen wurden. Einzelheiten darüber sind in der Literatur beschrieben wie z. B. Erhardt, Zinser, Komitowski, Bille, Reconstructing 3-D Licht-Microscope Images by Digital Image Processing, Applied Optics, Vol. 24 pp. 194-200 und US-Patent Nr. 4 360 885. Die Rückfaltung kann durchgeführt werden, indem eine dreidimensionale Fouriertransformation auf einen Würfel von 64 x 64 x 64 Bildpunkten je 8 bit angewandt wird. Das ergibt einen neuen Satz von 64 x 64 x 64 Bildpunkten, jetzt im Frequenzbereich. Man kann das den Fourierdatenwürfel nennen. Mit dieser gleichen Methode kann auch der Doppelkegel in den Frequenzbereich transformiert werden. Das kann man die Fourierinstrumentenfunktion nennen. Das Reziproke der Instrumentenfunktion im Fourierbereich wird unter Einbeziehung der Erkenntnisse des Wienerfiltering berechnet und mit dem Fourierdatenwürfel multipliziert. Das Ergebnis dieses Produktes der Bilddaten und des Reziproken der Instrumentenfunktion, berechnet im Frequenzbereich, stellt die verbesserten Bilddaten dar. Es wird mit der inversen Fouriertransformation behandelt. Ergebnis sind die erwünschten mit Rückfaltung behandelten Daten der Probe.

Dies stellt eine sehr erfolgreiche, leistungsfähige mathematische Methode dar. Dennoch sind die Ergebnisse entmutigend, weil die Bilder, die man dargestellt auf einem Fernsehschirm nach der Berechnung erhält, nicht genügend Einzelheiten zeigen und weil zuviel Rauschen die Bilder beeinträchtigt.

Ein Phasenkontrastmikroskop wie das nach US-Patent Nr. 2 660 923 sieht ähnlich aus wie ein Mikroskop nach der Erfindung, die später beschrieben wird. Phasenkontrastmikroskope werden gebaut um Bilder von Einzelheiten zu erzeugen, die sich durch ihre phasenschiebenden Eigenschaften unterscheiden. Das Mikroskop wie in Fig. 1 gezeigt, würde die phasenschiebenden Eigenschaften nicht zeigen. Es hat eine Aperturblende (23) und eine Objektivaperturblende (27), die beide geformt sind wie Fig. 2. Um dieses Mikroskop für Phasenschiebung einzurichten, wird es mit einer ringförmigen Aperturblende, wie in Fig. 3 dargestellt, ausgerüstet und eine ringförmige Objektivblende wie in Fig. 4 wird eingebaut. In beiden Figuren bezeichnen karierte Flächen (22) lichtundurchlässige Gebiete, helle Flächen (24) bezeichnen zu 100 % transparente Gebiete und die grauschattierte Fläche (20) in Fig. 4 hat eine Lichtdurchlässigkeit von etwa 20 % zuzüglich einer phasenwinkelschiebenden Eigenschaft von 90°. Die Linsen des Phasenkontrastmikroskops werden so aufgebaut, daß der transparente Ring laut Fig. 3 auf den grauschattierten Ring nach Fig. 4 abgebildet wird und beide die gleiche Größe haben. So interferiert auf der Fernsehröhre (28) das Licht von der Lichtquelle (20) mit dem Licht, das von der Probe gebeugt wurde. Mikroskope dieser Art zeigen den Brechungsindex des Objekts in Form heller und dunkler Gebiete. Im Gegensatz zur hier geschilderten Erfindung ist es der Zweck der Ringe, die in Fig. 2 und 3 dargestellt sind, verschiedene Lichtwege für direktes und gebeugtes Licht zu schaffen und die Phase des direkten Lichtes zu verschieben.

Ringförmige Aperturen und ringförmige Strukturen im Lichtweg wurden auch offenbart für verschiedene Zwecke im britischen Patent 1 595 422, im US-Patent 2 660 423, im US-Patent 4 150 360 und im US-Patent 4 202 037.

Die vorliegende Erfindung hat die Aufgabe, für absorbierende, streuende, phasenschiebende und fluoreszierende Proben ein Verfahren und eine Anordnung anzugeben, die die genannten Nachteile vermeidet und in Rauschabstand, Kontrast und Auflösung auch bei dicken Proben sehr gute Bilde liefert.

Diese Aufgabe wird erfindungsgemäß durch ein Verfahren mit den Merkmalen des Anspruchs 1 und ein abbildendes System mit den Merkmalen des Anspruchs 3 gelöst.

Die Strahlung im Beleuchtungs- und/oder Abbildungsstrahlengang wird im Ortsbereich moduliert. Dazu wird als zusätzliches Element ein das Licht modulierendes Muster in der Aperturblende oder einer zugeordneten Ebene eingefügt, das der Rechner bei Rückfaltung erkennen kann. Das Modulationsmuster kann z.B. eine Reihe von dunklen und lichtdurchlässigen konzentrischen Ringen sein oder es kann ein transparenter Ring sein, der eine ringförmige Apertur erzeugt, wie es später im einzelnen dargestellt wird. Für spezielle Mustererkennungsaufgaben können andere, besonders ausgewählte Muster benutzt werden. Das ermöglicht eine große Reihe unterschiedlicher Anwendungen der Erfindung für Zwecke der Mustererkennung. Am vorliegenden Beispiel wird eine Reihe dunkler und klarer konzentrischer Ringe am Ort der Aperturblende angeordnet. Das ergibt eine Reihe heller und dunkler Kegel in der Weise, wie die Doppelkegel auf dem Objekt in der Fokusebene sich treffen. Auf jeder Seite der Fokusebene kann man die hellen und dunklen Flächen beobachten. Aber die hellen und dunklen Zonen werden zu einem einzelnen Lichtpunkt konvergieren und im Fokuspunkt eines jeden Doppelkegels werden keine dunklen Stellen beobachtet. Wenn eine vollständige Zelle im Objekt sich befindet, werden auf jeder Seite der Fokusebene abwechselnde Teile der Zelle beleuchtet und nicht beleuchtet, insoweit das Licht eines jeden Punktes betrachtet wird. Aber der ganze Teil der Zelle in der Fokusebene wird entsprechend der Fokussierung der Doppelkegel beleuchtet. Das Bild, das man auf der Fernsehröhre aufnimmt, wird dann in einen Computer übertragen, der es entsprechend einem Algorithmus rekonstruiert, der sich im Computer befindet und dem jeweiligen lichtmodulierenden Muster entspricht. Wenn der Computer erkennt, daß verschiedene helle und dunkle Stellen da sind, wird klar, daß diese Fläche der Zelle auf einer der beiden Seiten außerhalb der Fokusebene liegt. Die Bilder werden unterdrückt und das Bild aus der Fokusebene bleibt übrig. Die Erkennung des Zellbildes wird ausgeführt unter Einbeziehung der Daten von einer Serie von Bildern aus verschiedenen Fokusebenen. Um diese Bilder zu erhalten, bewegt ein Motor mit Getriebe schrittweise die Zelle durch die Fokusebene. Als Ergebnis kann das dreidimensionale Bild der ganzen Zelle rekonstruiert werden.

Wichtiger Aspekt dieser Erfindung ist die Anordnung eines lichtmodulierenden Musters in der Ebene der Aperturblende. Für absorbierende und streuende Proben ist das geeignete Muster gekennzeichnet durch lichtmodulierende Muster in der Objektivaperturblende bestehend aus einem oder mehreren konzentrischen Ringen abwechselnd zwischen Transparenz und hoher Absorption. Für phasenkontrasterzeugende Objekte ist das modulierende Muster gekennzeichnet durch lichtmodulierende Muster aus mehreren konzentrischen Ringen mit abwechselnd phasenschiebenden und nichtphasenschiebenden Eigenschaften.

Für Objekte mit polarisierenden Objekteinzelheiten ist das Muster gekennzeichnet durch lichtmodulierende Muster aus Ringen abwechselnd zwischen einer Polarisationseigenschaft für eine erste Richtung und Polarisationseigenschaft für eine zweite Richtung. Wenn ein besonders guter Rauschabstand zu schaffen ist, sind Muster zu verwenden, die gekennzeichnet sind durch Abmessungen derart, daß vom Kondensor stammendes Beleuchtungslicht teilweise mit lichtabsorbierenden Strukturen in der Objektivpupille blockiert wird.

Für Bilder höchster Auflösung bei Inkaufnahme größeren Rechenaufwandes werden ein Verfahren und Muster vorgesehen, die gekennzeichnet sind durch Anwendung einer Vollkreisapertur mit konstanter Größe im Objektiv und schrittweises Vermindern der ringförmigen Apertur im Kondensor.

Es sollte auch erwähnt sein, daß das lichtmodulierende Muster in der Objektivaperturblende oder auf der Lichtquelle oder in einer Kombination dieser Orte angeordnet sein kann.

Das dargestellte Verfahren verbessert die Auflösung von Mikroskopen. In vielen Fällen wird das Mikrotom und das zeitaufwendige Schneiden von Objekten überflüssig, wenn ein computerbetriebenes Mikroskop mit Modulationsmuster entsprechend der vorliegenden Erfindung zur Verfügung steht.

Die Erfindung wird im folgenden anhand der Figuren 1 bis 25 erläutert. Dabei zeigen

Fig. 1                    die Optik eines Mikroskops nach dem Stande der Technik;

Fig. 2                    die Aperturblende für das Mikroskop nach Fig. 1;

Fig. 3                    die Kondensoraperturblende für ein Phasenkontrastmikroskop;

Fig. 4                    die Objektivaperturblende eines Phasenkontrastmikroskops;

Fig. 5                    die Optik eines Mikroskops nach der vorliegenden Erfindung mit Modulationsmuster in der Ebene der Kondensoraperturblende;

Fig. 6                    die Optik eines Mikroskops nach der vorliegenden Erfindung mit einem Modulationsmuster in der Ebene der Objektivaperturblende;

Fig. 7                    ein Blockdiagramm eines Rechners zur Bildspeicherung und Fouriertransformation;

Fig. 8                    in einem Diagramm ein Mikroskopobjektiv mit Vorrichtungen zur raschen Durchfokussierung;

Fig. 9                    die dreidimensionale Wiedergabe einer Fokusebene im Objekt;

Fig. 10                   ein Beispiel des modulierenden Musters;

Fig. 11                   eine Aperturblende;

Fig. 12, 13 und 14        andere Beispiele von modulierenden Mustern;

Fig. 15                   die Optik eines Mikroskops mit Mitteln um modulierende Muster automatisch auszuwechseln;

Fig. 16 a, b und c        eine Kombination von Mustern für Beleuchtung und abbildenden Teil der Optik, ausgelegt den dynamischen Bereich des Systems zu erhöhen;

Fig. 17                   die Optik eines Mikroskops mit Mustern nach Fig. 16;

Fig. 18                   das Flußdiagramm, das für die Rückfaltung mit Fouriertransformation geeignet ist;

Fig. 19                   das Flußdiagramm wie Fig. 18 aber mit Rückfaltung im Ortsbereich;

Fig. 20                   eine Folge von modulierenden Mustern zum Scannen im Frequenzbereich;

Fig. 21                   eine Folge wie in Fig. 20 aber mit dunklen Ringen, die teilweise das Gleichlicht blockieren;

Fig. 22                   ein Beispiel des Absorptionsprofils eines apodisierten Ringes;

Fig. 23                   ein Beispiel eines Modulationsmusters zur Anwendung mit polarisiertem Licht;

Fig. 24                   ein Beispiel eines Modulationsmusters zur Anwendung mit phasenverschobenen Lichtwellen und

Fig. 25                                     ein Flußdiagramm für das Fortranrechnerprogramm.

Mikroskope nach dem Stande der Technik haben einen Lichtweg in Form eines Doppelkonus, wenn sie für Rückfaltungsprozesse benutzt werden. Die Struktur des Doppelkonus selbst kann nicht leicht durch das Aufnahmesystem des Computers erkannt werden und nicht leicht analysiert werden. Auch erzeugt der Mangel an Struktur im Doppelkonus Rauschen, wenn Rückfaltung durchgeführt wird und es ergeben sich nur dürftige Bilder für den Beobachter. Um die Nachteile der dürftigen Bilder, die bei Rückfaltung mit der Konusfunktion des Mikroskops entstehen zu vermeiden, werden Mittel vorgesehen um die Lichtverteilung im Raum des Doppelkonus zu modulieren. Dadurch wird zusätzliche Struktur in den Lichtpfad an allen Orten außer in der Fokusebene eingeführt. Von der üblichen Modulation im Zeitbereich ist diese Modulation im Ortsbereich deutlich unterschieden. Zur Modulation im Ortsbereich wird ein Modulationsmuster in eine der Ebenen, wo die Beleuchtungsquelle fokussiert ist, eingebracht. Eine Folge von z. B. 64 Bildern mit 64 verschiedenen Positionen im Fokus werden vom Objekt im Memory abgespeichert und dann unter Benutzung eines Algorithmus rückgefaltet, der die Faltung der Bilder der Probe im Objekt mit Hilfe der mustermodulierten Lichtkegel rekonstruiert. Dieser Algorithmus berücksichtigt während der Rekonstruktion der Bilder der Probe im Objekt das modulierende Muster und die Eigenarten der Bilder, die im Mikroskop entstehen. Typisch wird dies mit einer Fouriertransformation durchgeführt. Das sei nachfolgend im Zusammenhang mit den mathematischen Grundlagen erläutert.

Die Erzeugung von Bildern in optischen Systemen kann verstanden werden als dreidimensionale Faltung des Objekts mit einer Pulsantwortfunktion, die typisch für das benutzte optische System ist.

Um Objekte von dreidimensionalen Bildern zu rekonstruieren und für ähnliche Zwecke ist es vorteilhaft, eine dreidimensionale Faltung elektronisch durchzuführen. Dieser Vorgang ist in der Literatur von K. R. Castleman, Digital Image Processing, Prentice Hall 1979 und von William K. Pratt, Digital Image Processing, Wiley & Sons 1978 und Blahut R. E., Fast Algorithms for Digital Image Processing, Addison Wesley Publ., Oregon-New York 1985, beschrieben. Die Prozedur dazu sieht folgendermaßen aus:

Gegeben sei eine dreidimensionale Objektfunktion o (x, y, z) und eine dreidimensionale Impulsantwortfunktion m (x, y, z). Das Bild i (x, y, z) wird erzeugt durch

$$i\ (x,\ y,\ z) = o\ (x,\ y,\ z)\ {}^{*}\ m\ (x,\ y,\ z). \tag{1}$$

Das Symbol * steht für Faltung.

Im Frequenzbereich wird die Faltung eine Multiplikation:

$$I\ (u,\ v,\ w) = O\ (u,\ v,\ w)\ .\ M\ (u,\ v,\ w). \tag{2}$$

Darin ist I das erzeugte Bild im Frequenzbereich, O ist die dreidimensionale wahre Funktion des Objekts im Frequenzbereich und M die dreidimensionale Impulsantwortfunktion im Frequenzbereich.

Um das Objekt aus dem dreidimensionalen Bild zu rekonstruieren oder zu verbessern, muß die inverse Operation im Rechner durchgeführt werden. Sie wird Rückfaltung genannt:

$$OC\ (u,\ v,\ w) = I\ (u,\ v,\ w)\ .\ \approx M\text{-}1\ (u,\ v,\ w) \tag{3}$$

und im Ortsbereich

$$oc\ (x,\ y,\ z) = FFT^{-1}\ (OC\ (u,\ v,\ w)). \tag{4}$$

OC ist das rekonstruierte Objekt im Frequenzbereich und oc ist das erwünschte rekonstruierte Objekt im Ortsbereich.

≈ M-1 ist die Annäherung der reziproken Funktion von M und FFT$^{-1}$ ist die inverse Fouriertransformation. Die Gleichungen (1) und (2) beschreiben, was im Bildaufnahmesystem z. B. dem Mikroskop geschieht. Die Gleichungen (3) und (4) beschreiben die Rückfaltung im Rechner.

Das System nach der vorliegenden Erfindung verbessert diesen Prozeß mit Hilfe von Modulationsmustern im Strahlungsgang des Bildaufnahmesystems. Das Modulationsmuster verändert die dreidimensionale Impulsantwort Funktion m und M in einer spezifisch günstigen Weise.

Fig. 18 zeigt das Flußdiagramm eines typischen Computerprogramms um die notwendige Rückfaltung durchzuführen. In Fig. 18 verläuft das Flußdiagramm von Block 1 bis Block 7 aufeinanderfolgend. In Block 1 wird das zu verwendende Modulationsmuster ausgewählt und in das optische System eingesetzt. In Block 2 wird die Fourier-Transformierte der Reziproken zur 3D-Impulsantwortfunktion des optischen Systems und des Modulationsmusters berechnet. In Block 3 wird i(x,y,z), welches eine Anzahl von z.B. 64 digitalisierten TV-Bildern ist, die in unterschiedlichen Stellungen der Probe entlang der Fokus-(z)-Richtung aufgenommen werden, gemessen. In Block 4 wird daraus die I (u,v,w) genannte 3D-Fourier-Transformierte der Bilder berechnet. In Block 5 wird das Produkt der 3D-Matrizen I(u,v, w) und $M^{-1}$(u,v,w) berechnet. Nachfolgend wird in Block 6 die inverse Fourier-Transformierte des Produkts berechnet. Das Ergebnis sind die gewünschten Bilder, bereinigt um die out-of-focus-Störungen. Das Ergebnis wird oc(x,y,z) genannt. In Block 7 werden Bilder auf dem Display dargestellt, in dem entweder eine beliebige 2D-Untermatrix von oc (x,y,z) für ein 2D-Display oder die komplette 3D-Matrix oc(x,y,z) für ein 3D-Display verwendet wird. In Block 8 wird abgefragt, ob eine neue Probe beobachtet werden soll. In Block 8 schreitet das Programm nach Block 9 fort, wenn keine neue Probe zu beobachten ist, wo das Programm beendet wird. Wenn eine neue Probe zu beobachten ist, schreitet das Programm fort nach Block 10, wo abgefragt wird, ob ein neues Modulationsmuster ausgewählt werden soll. Wenn kein neues Modulationsmuster angewandt werden soll, schreitet das Programm weiter nach Block 11. In diesem Augenblick ist SPEC wahr und MOD falsch und Block 11 steuert das Programm nach Block 3, um die Beobachtung der Probe zu wiederholen und die Daten werden in der Reihenfolge berechnet wie zuvor. Wenn in Block 10 ein neues Modulationsmuster ausgewählt wurde, wird Block 11 ausgelassen und das Programm geht nach Block 12, welcher den Prozeß nach Block 1 fortsetzt, wo ein Modulationsmuster ausgewählt wird und die Messungen und Berechnungen für das neue Modulationsmuster und die neue Probe durchgeführt werden.

In dieser Anwendung bekannter Faltungsprozesse ist i (x, y, z) eine reale Funktion, gemessen z. B. mit einer Videokamera. Wie schon erwähnt, kann m (x, y, z) etwa die Form eines Doppelkonus mit den Kegelspitzen bei x = y = z = 0 haben. Er hat im Detail die gleiche innere Struktur wie beschrieben in N. Streibl, Untersuchungen zur dreidimensionalen optischen Bildentstehung und Bildverarbeitung, Diss. Univ. Erlangen-Nürnberg 1984. Die Intensität innerhalb der Kegel ist in etwa proportional zu

$$\frac{1}{z^2}$$

wo z die Achse des Doppelkegels ist. Um die tatsächliche Gestalt aufzunehmen, kann diese berechnet oder gemessen werden.

Das Ziel ist, eine dreidimensionale Faltung schnell mit beschränktem Speicherbedarf und beschränkter Zugriffgeschwindigkeit durchzuführen, indem der Exponent von 2 auf einen höheren Wert gebracht wird, so daß die

$$\frac{1}{z^2}$$

Characteristik verbessert wird in Richtung auf

$$\frac{1}{z^3} \text{ oder } \frac{1}{z^4}$$

Die vorangehend geschilderte mathematische Methode benutzt den Frequenzbereich. Geht man aber davon aus, daß Prozessoren für rasche Faltung im Ortsbereich zur Verfügung stehen, so kann Faltung im Ortsbereich günstiger sein. Eine mathematische Prozedur, die dafür geeignet ist, ist die Singular Value Decomposition, beschrieben im Buch von William K. Pratt, das schon erwähnt wurde.

Fig. 19 zeigt das Flußdiagramm eines Programms mit Rückfaltung im Ortsbereich. Das Flußdiagramm ist ähnlich dem in Fig. 18. In Block 1 wird ein Modulationsmuster ausgewählt und in das optische System eingesetzt. In Block 2 wird ein inverser Filter berechnet, der geeignet ist, die Eigenschaften des optischen Systems und des Modulationsmusters zu kompensieren und die zugehörige Singular Value Decomposition berechnet. In Block 3 wird i(x,y,z), welches eine Anzahl von z.B. 64 digitalisierten TV-Bildern ist, die in unterschiedlichen Stellungen der Probe entlang der Fokus-(z-)Richtung aufgenommen werden, gemessen. In Block 4 wird i(x,y,z) räumlich mit dem inversen Filter gefaltet. Das Ergebnis sind die gewünschten Bilder, bereinigt von out-of-focus-Störungen. Das Ergebnis wird oc(x,y,z) genannt. In Block 5 werden die Bilder auf dem Display dargestellt, indem entweder eine beliebige 2D-Untermatrix von oc(x,y,z) für ein 2D-Display oder die komplette 3D-Matrix oc(x,y,z) für ein 3D-Display verwendet wird. In Block 6 wird abgefragt, ob eine neue Probe beobachtet werden soll. Das Programm endet, wenn keine neue Probe zu beobachten ist. Andernfalls wird abgefragt, ob ein neues Modulationsmuster ausgewählt werden soll. Soll kein neues Modulationsmuster ausgewählt werden, so geht das Programm zu Block 3. Wenn beides eintritt, eine neue Probe und ein neues Modulationsmuster zu benutzen sind, dann geht das Programm nach Block 10, der weiterführt zu Block 1 zur Auswahl des neuen Modulationsmusters.

Obwohl dieser Prozeß mit dem Modulationsmuster für alle Arten von Systemen benutzt werden kann, die Bilder mit Strahlung herstellen, wird er nachfolgend beschrieben für Mikroskope zur Aufnahme von Bildern von absorbierenden, streuenden oder phasenschiebenden Objekten. Die Fig. 5, 6, 15 und 17 zeigen Beispiele von Mikroskopausführungen mit Modulationsmuster und Rechner passend zur Auswertung der Vorteile der Erfindung. Ein geeigneter Computer besteht aus einem für viele verschiedenartige Zwecke geeigneten Rechner z. B. einer Microvax und einem Arrayprozessor wie er von Mercury Computer Systems Inc. hergestellt wird.

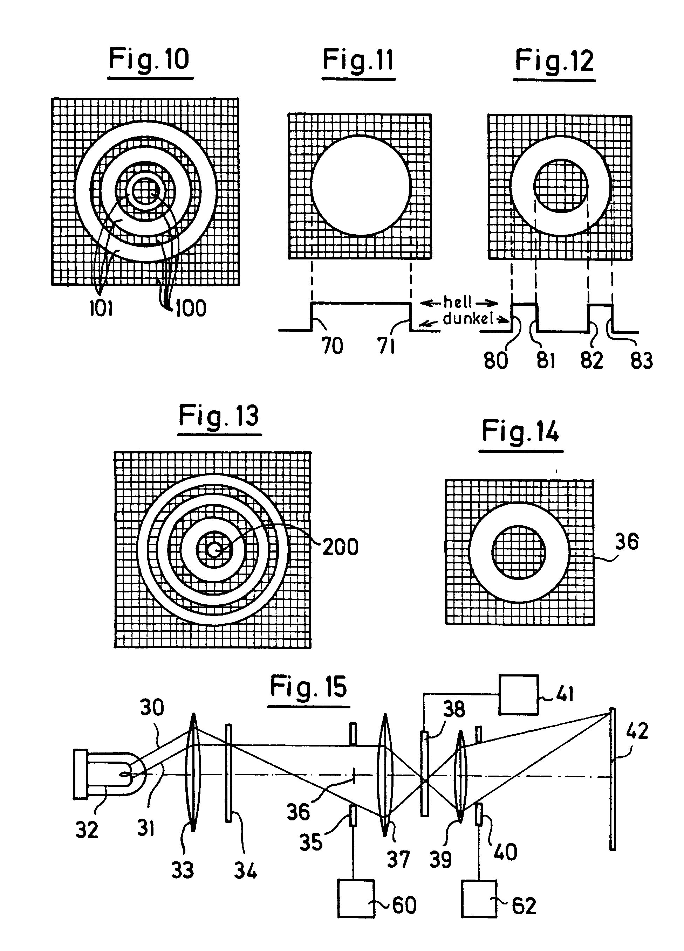

Fig. 5 zeigt einen Leuchtfaden (32) und die parallelen Lichtstrahlen, dargestellt durch die Linien (30) und (31) vom Leuchtfaden (32), die von dem Kollektor (33) in einer Weise gebeugt werden, daß sie eine Leuchtfeldblende (34) passieren. Ein Laser mit den geeigneten Eigenschaften, eine Apertur auszuleuchten, kann auch als Lichtquelle benutzt werden. In der Ebene einer Kondensoraperturblende (35) ist gemäß der Erfindung ein Modulationssmuster (36) dargestellt. Eine Aufsicht auf das aperturmodulierende Muster (36) ist in Fig. 14 dargestellt, die der Fig. 3 ähnelt. Es moduliert das Licht im Ortsbereich und verbessert so die bekannte Rückfaltungsmethode wie sie beschrieben ist in den Literaturangaben auf Seite 5. Der Lichtweg des Mikroskops zeigt die Kondensoroptik (37), das Objekt (38), das Objektiv (39), die Objektausgangsapertur (40) und das Target der Fernsehröhre (42). Zur Erleichterung der Funktion des Systems sieht die Erfindung einen Motorantrieb (41) vor, der das Objekt (38) durch verschiedene Fokusstellungen entlang der Achse bewegt und der durch einen Computer in einer Weise gesteuert wird, die noch erläutert wird. Eine solche Fokussteuerung ist an sich wohlbekannt.

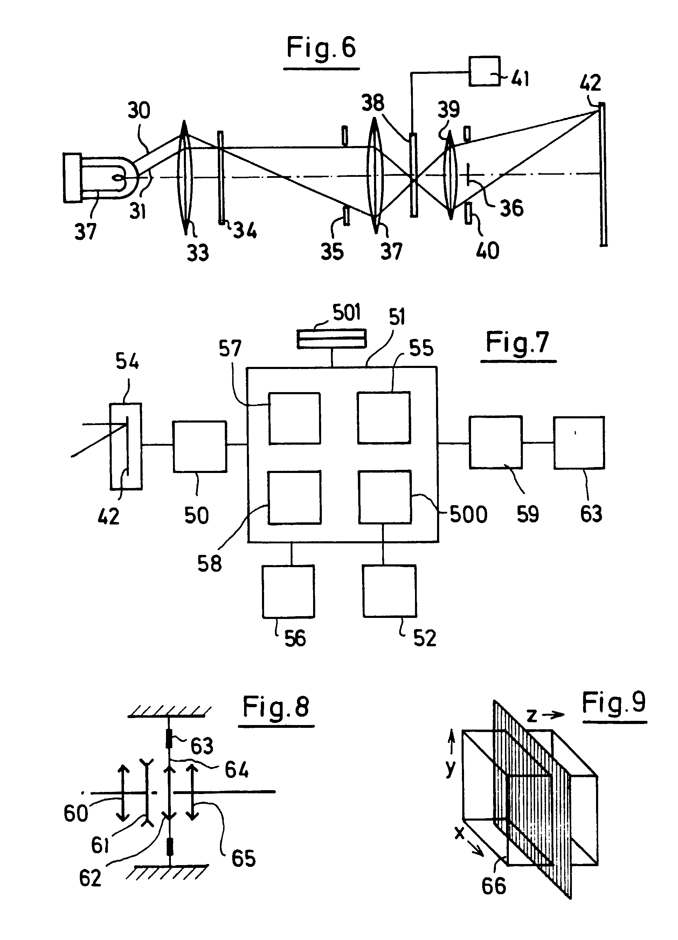

Fig. 6 zeigt das die Apertur modulierende Muster (36) in einer anderen Position. Es befindet sich in der Ebene der Objektivaustrittsaperturblende (40). Diese Stellung verändert die übertragunsfunktion des Objektivs in einer Weise, wie sie in der Arbeit von N. Streibl, die schon erwähnt wurde, auf den Seiten 26 und 29 geschildert ist. Daraus kann geschlossen werden, daß nur in den Fällen, in denen eine zusätzliche Verstärkung der hohen Frequenzen beabsichtigt wird, eine Anordnung nach Fig. 6 vorteilhaft im Vergleich zur Anordnung nach Fig. 5 ist.

Fig. 7 zeigt die Fernsehröhre (42) innerhalb der Fernsehkamera (54). Das Fernsehsignal ist angeschlossen an einen A/D-Wandler (50) und wird übertragen in einen Mehrbildspeicher (51), wobei das Memory (57) ein Frame-Grabber-Memory für die Bilder der Fernsehkamera darstellt. Memory (55) speichert die Bilder, nachdem sie verarbeitet wurden. Memory (58) enthält die Systemsoftware und Memory (500) hat einen schnellen Datenkanal zum Arrayprozessor (52), der die rasche Rückfaltung ausführt. Ein Hostprozessor (56) steuert das Gesamtsystem.

Der D/A-Konverter (59) hat einen Hochgeschwindigkeitsdatenkanal vom Memory (55) und versorgt das Display (53) mit Fernsehsignlen um die gereinigten Bilder darzustellen. Das Keyboard (501) erlaubt dem Benutzer die Funktionsweise des Systems zu steuern. Die Speicherung der Bilder aus verschiedenen Fokusebenen des Objekts wird synchronisiert, so daß ein Bild von jeder der aufeinanderfolgenden Fokusebenen in einem Speicherbereich abgespeichert wird. Der Rechner steuert auch schrittweise den Fokus und die modulierenden Muster, dargestellt in den Blöcken (41, 60 und 62) in Fig. 15. Der Arrayprozessor (52) hat schnellen Zugang zu verschiedenen abgespeicherten Bildern und transformiert sie mit hoher Geschwindigkeit in den Fourierbereich. Das ist im Buch von William K. Pratt, das schon erwähnt wurde, geschildert. Entsprechend der vorliegenden Erfindung speichert das Memory (51) auch die Umkehrung der Fouriertransformation der Mikroskopbilder unter Berücksichtigung der Modulation im Ortsbereich, die von dem aperturmodulierenden Muster (36) nach Fig. 5 durchgeführt wird. Die Bilder werden in einem fouriertransformierten Datenwürfel multipliziert und danach werden die verbesserten Daten rücktransformiert aus dem Fourier- in den Ortsbereich. Das Display (53) stellt eine oder mehrere der verbesserten Bilder gleichzeitig dar. Zusammmen mit dem an sich bekannten Stand der 3D-Bildwiedergabe ist es auch möglich, die dreidimensionale Form des Objektes wiederzugeben. Der Bildausgang des Systems nach der vorliegenden Erfindung zeigt so viele Einzelheiten wie das Mikroskop theoretisch auflösen kann. Im Buch von Pratt, das schon erwähnt wurde, sind auch alternative Methoden für den mathematischen Teil der Rückfaltung beschrieben, die anstelle des Fourieralgorithmus benutzt werden können. Faltung und Rückfaltung im Ortsbereich mit Singular Value Decomposition ist eine geeignete Möglichkeit, wenn ein Rechner zur Verfügung steht, der sie in angemessener Zeit durchführen kann.

Fig. 8 zeigt andere Mittel um schrittweise verschiedene Fokusebenen des Objektes aufzunehmen. Linsen (60, 61, 62 und 65) befinden sich im Mikroskopobjektiv. Linse (62) wird von einem Schichtelement (64) mit Piezoeigenschaften gehalten. Elektroden (63) werden mit einer nicht dargestellten elektrischen Spannung angesteuert und biegen das Schichtelement (64), um die Linse (62) in Richtung der Achse des Systems zu bewegen. Diese Struktur wird angewendet in Mikroskopen mit automatischer Fokussierung durch ein schnelles Fokusschrittobjektiv.

Fig. 9 zeigt die Fläche des Objekts, in der eine Probe (nicht dargestellt) angeordnet ist und eine von 64 aufeinanderfolgenden Fokusebenen, die benutzt werden um ein Bild der Probe aufzunehmen.

Fig. 10 zeigt ein anderes Beispiel eines die Apertur modulierenden Musters. Es besteht aus aufeinanderfolgenden konzentrischen Ringen. Karierte Flächen (100) bezeichnen lichtundurchlässige Gebiete und weiße Flächen (101) transparente Gebiete. Um eine angemessene Verbesserung der räumlichen Auflösung des Systems zu erhalten, sieht die Erfindung ein dunkles Gebiet im Zentrum dieser Struktur vor. Das geschieht, weil Lichtstrahlen durch das Zentrum der Achse des Mikroskops zur räumlichen Auflösung nicht beitragen.

Die vorliegende Erfindung offenbart eine Methode und eine Anordnung, um die Auflösung von Bildern von Proben zu verbessern und dreidimensionale Bilder zu erzeugen. Ein wesentliches Problem, das zu lösen ist, ist die Auswahl eines passenden Musters, das eine geeignete Übertragungsfunktion des bildgebenden Systems des Mikroskops erzeugt.

Wo immer möglich, wird ein sehr kurzer Impuls oder ein kleines Volumen als übertragungsfunktion benutzt um bei Meßvorgängen und Bilderzeugungen zu sampeln. Dieser Impuls sollte dem sogenannten Diracstoß so nahe wie möglich kommen, der in dem schon erwähnten Buch von Pratt beschrieben ist. Z.B. wird bei der wohlbekannten Röntgenstrahl-Computertomographie ein sehr dünner Röntgenstrahl benutzt. Der menschliche Körper wird gedreht, um seine Durchlässigkeit unter verschiedenen Winkeln aufzunehmen (sampeln). Ein Rechner speichert die gemessenen Lichtdurchlässigkeiten und berechnet ein Bild des Querschnitts des Körpers, das Knochen, Gewebe und wenn vorhanden Tumoren zeigt.

Dies kann in der Lichtmikroskopie jedoch nicht angewandt werden. Genügend dünne Strahlen können nicht erzeugt werden, weil Beugung zuviel Licht ablenkt. Mikroskophersteller haben von Abbe, Beiträge zur Theorie des Mikroskops und der mikroskopischen Wahrnehmung, Schulzes Archiv für mikroskopische Anatomie, 9, Seite 413, gelernt, daß in Lichtmikroskopen große Aperturen verwendet werden müssen. Man kann auch sagen, daß es notwendig ist "dicke" Strahlen zu verwenden. Außerdem ist es nicht praktikabel, kleine Zellen oder Gewebe in Routineanwendungen zu drehen.

Die Erfindung offenbart eine Methode und eine Anordnung zur Durchführung der Methode, die beiden Bedürfnissen genügt:

1. eine genügend große Apertur vorzusehen und
2. die Notwendigkeit, die Probe zu drehen, zu vermeiden.

Dazu muß die Auflösung in Richtung der Achse (Z-Richtung) des Systems verbessert werden und die modulierende Wechselwirkung zwischen Licht und Probe während des Durchfokussierens ist zu verstärken. Das aperturmodulierende Muster wie in Figur 14 gezeigt hat drei Eigenarten, die diesen Zwecken dienen. Erstens wird der Mittelteil des Lichtkegels verdunkelt um das Licht auszulöschen, das zur Auflösung in Z-Richtung nicht beiträgt. Zweitens hat die Kegelstruktur vier Kanten in ihrem Querschnitt anstelle von zwei Kanten, wie sie bei dem Querschnitt der konventionell vollen Apertur vorhanden sind. Um dies klarer darzustellen zeigt Figur 11 die Lichtintensitätsverteilung des Querschnitts der Vollkreisapertur und Figur 12 die Verteilung im Querschnitt der Ringapertur, erstere mit zwei Kanten (70) und (71), letztere mit vier Kanten, (80), (81), (82) und (83).

Wie dem Fachmann wohlbekannt, ist eine Kante die Integration eines kurzen Impulses, des erwähnten Diracimpulses; so erzeugt die Apertur nach Figur 12 vier Kanten um die Wechselwirkung zwischen Probe und Instrument zu verstärken. Dies gilt, obwohl die Kanten selbst im einzelnen gemäß der Zirkularsymmetrie der Kegel dünne Ringe sind.

Aus dieser Erklärung kann auch geschlossen werden, daß eine noch stärkere Anhebung der Wechselwirkung entsteht, wenn der Lichtweg in mehr als einen konzentrischen Ring aufgeteilt wird. Figur 10 zeigt ein Beispiel mit drei transparenten Ringen. Der Querschnitt dieser Ansammlung konzentrischer Ringe hat zwölf Kanten. Weitere Steigerung der Zahl der Ringe wird begrenzt durch die Auflösung der Optik und die Beugung des Lichtes.

Die Größe des zentralen dunklen Teiles im Muster und die Zahl der Ringe, die zu benutzen sind, hängt von den Eigenarten und Strukturen der zu untersuchenden Probe ab. Allgemein kann gesagt werden, daß für Proben mit vielen kleinen Einzelheiten ein großer Ring bessere Ergebnisse liefert und für Proben mit großen, nicht so gut kontrastierten Mustern viele kleine Ringe vorzuziehen sind.

Zusätzlich sei erwähnt, daß die wirksame Aperturfläche des optischen Systems vom Modulationsmuster reduziert wird. Entsprechend Abbes Theorie, die in der vorerwähnten Arbeit enthalten ist, verschlechtert Reduktion der Apertur die Auflösung in der Fokusebene, also der X-Y-Richtung des Mikroskops. (Die X-Y und Z-Richtung sind dargestellt in Figur 9). Der Kompromiß wird eingegangen um verbesserte Auflösung in Richtung der Z-Achse zu erzielen und um verbesserte Unterdrückung von Probeneinzelheiten von außerhalb des Fokus zu erzielen. Um die Verschlechterung in X- und Y- zu begrenzen und dennoch genügend Verbesserung in Z-Richtung zu bekommen, ist es sinnvoll, eine kleine, transparente Fläche im Zentrum des Modulationsmusters in der Aperturblende anzuordnen. Ein Beispiel dazu zeigt Figur 13 als Fläche (200).

Eine weiter optimierte Auslegung von Mustern läßt sich durch Anwendung der Theorien der Radartechnik auf das Lichtmikroskop erreichen. Dazu geht man aus von der Theorie von W. M. Boerner et. al., Inverse Methods in Electromagnetic Imaging, Proc. NATO Advanced Res. Workshop in IMEI, Bad Winsheim, FR. Germany, Sept. 18-24, 1983;

NATO ASI Serien, Serie C, Math. & Phys. Sci., Vol. 143, D. Reidel Publ. Co., Dordrecht, Holland, 1985, und A. B. Kostinski & W. M. Boerner, On the Foundations of Radar Polarimetry - Part I: Coherent Case, submitted to IEEE Trans. A&P, 1985. Diese Referenzen offenbaren den theoretischen Stand der Erkenntnis, der zum Entwurf von Mustern mit polarisierenden Eigenschaften dienlich ist, die in der vorliegenden Erfindung nachfolgend erläutert werden.

Bis hierher wurden nur rotationssymmetrische Muster für die Modulation beschrieben. In Abweichung davon können parallele Balken benutzt werden, wenn Anhebung der Auflösung in einer nicht rotationssymmetrischen Weise angestrebt wird.

Mit der geschilderten Erfindung werden Verbesserungen der Bildauflösung von Mikroskopen erzielt. Sie ermöglicht es dem Benutzer auch, die für seine Aufgabe geeigneten Modulationsmuster auszuwählen. Darüberhinaus kann dieselbe Probe nacheinander mit verschiedenen Modulationsmustern aufgenommen werden und die Bilder können durch Rechner kombiniert in einen Bildwürfel eingebracht werden. Das wird nachfolgend erläutert.

Entsprechend der vorliegenden Erfindung wurde gezeigt, daß moduliertes Licht im Bild eines Objekts, das dicker als die Schärfentiefe des bildgebenden Systems ist, die Auflösung der Probe verbessert. Dies kann auf Bilder angewandt werden, die mit einem oder mehreren Modulationsmustern im optischen Strahlengang aufgenommen wurden. Eine Anzahl von Bildern aus verschiedenen Fokusstellungen müssen digitalisiert und im Rechner rückgefaltet werden. Wenn die Zeit zur Aufnahme der Bilder und ihrer Berechnung nicht im Wege steht, kann zusätzliche Auflösung und detailliertere Information durch Wiederholung der Methode gewonnen werden. Für diesen Zweck sieht eine Anordnung nach Figur 15 einen Motorantrieb (60) zum Auswechseln des Modulationsmusters im Strahlengang des Mikroskops vor und eine weitere motorisierte Anordnung (62) führt dieselbe Funktion bei der Objektivpupille (40) des optischen Systems aus. Zum Beispiel mit einer solchen Anordnung ist es möglich, die erwähnte Einschränkung bei der X-, Y-Auflösung zu vermeiden. Deshalb wird ein bildgebender Prozeß mit der vollen Apertur des optischen Systems ausgeführt. Er bestimmt die X-, Y-Auflösung. Ein zweiter bildgebender Prozeß wird durchgeführt mit einem Modulationsmuster, das die Apertur mindert und die Z-Auflösung verbessert, jedoch die X-, Y-Auflösung mindert. Der Rechner kombiniert dann beide Bildfolgen in einem endgültigen Satz von Bildern mit der vollständigen Auflösung in X- und Y- und der verbesserten Auflösung in Z-Richtung. Verbesserte Auflösung in Z-Richtung läßt sich nur mit Systemen nach der vorliegenden Erfindung erreichen.

Die verschiedenen möglichen Stellungen des modulierenden Musters im beleuchtenden Lichtweg wurden schon beschrieben. Nachfolgend wird eine Kombination offenbart, die die Tiefpaßeigenschaften der Optik abschwächt.

Systemingenieure und Forscher haben erläutert, daß Durchlichtmikroskope eine Tiefpaßcharakteristik haben und daß diese Tiefpaßcharakteristik die Bildverbesserungsrechnung behindert wegen der relativ gringen relativen Amplitude hochfrequenter Bildinformation. Dadurch erzeugt die Anhebung der höheren Frequenzen entstammenden Information im Bild viel Rauschen. Das wird verbessert durch ein Muster in der Kondensoraper tur mit einer Form und Größe, die nur teilweise die Objektivapertur überlappen. Ein ringförmiges Modulationsmuster nach Figur 14 ist auch hier eine gute Wahl. Es wird in die Apertur des Kondensors eingeführt und die zugehörige Objektivapertur überlappt es nur teilweise. Das ist im einzelnen im folgenden Absatz geschildert.

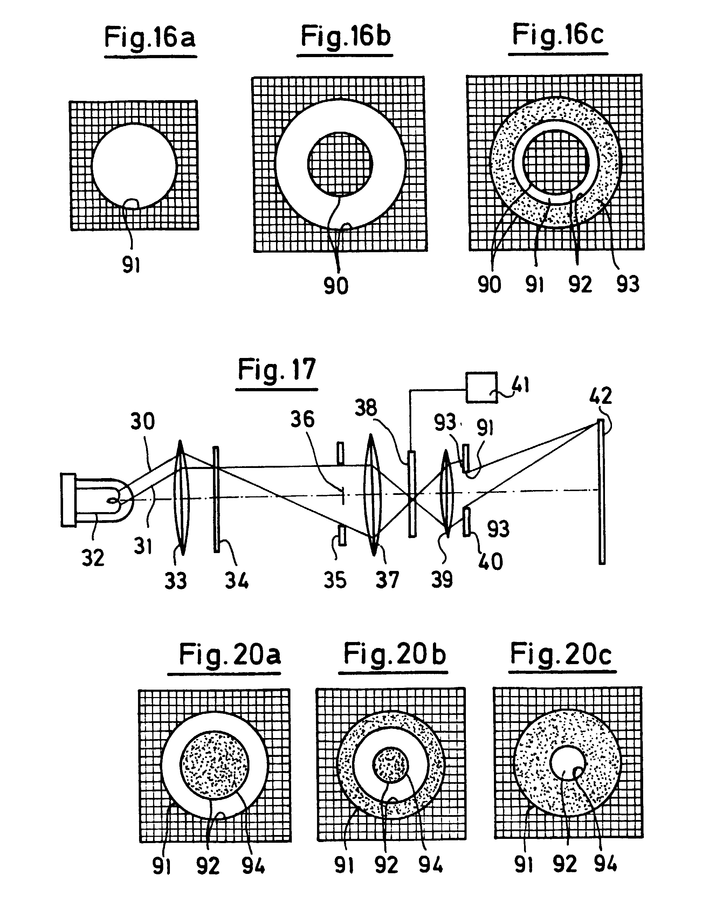

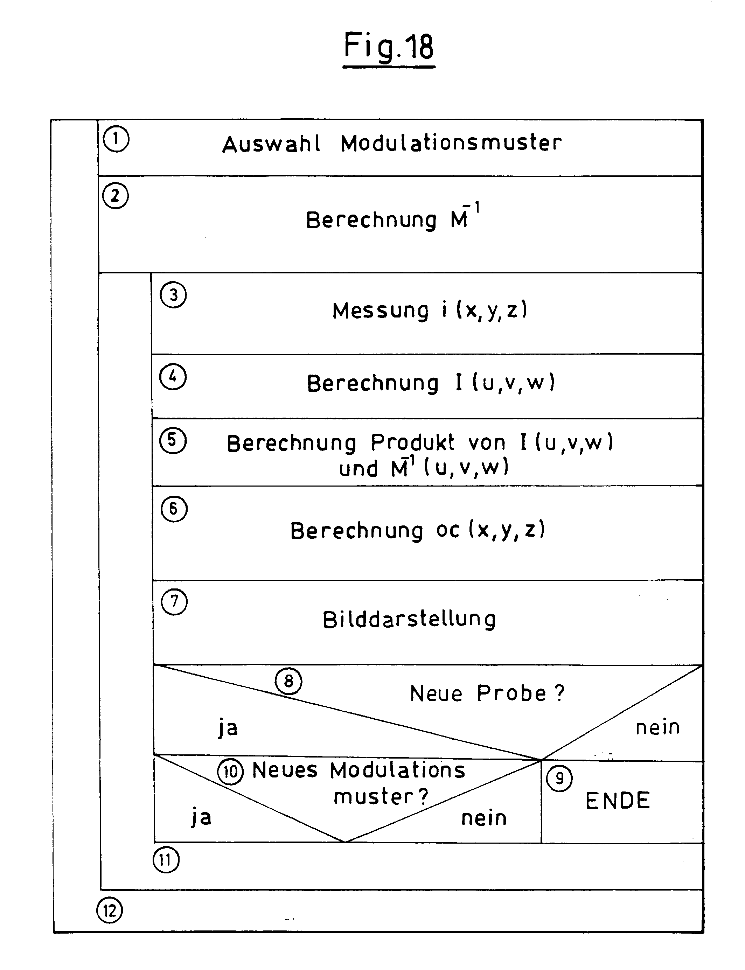

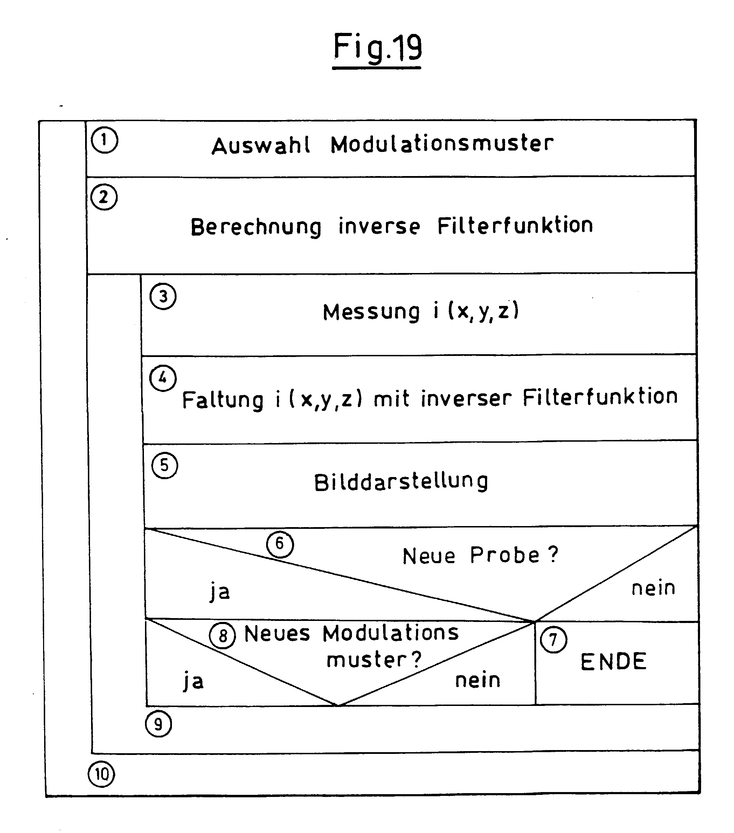

Die Beispiele nach Figur 16a und b zeigen die Größe der Vollkreisapertur (91) im Objektiv und die ringförmige Apertur (90) im Kondensor. Die relative Größe beider ist in Figur 16c dargestellt. Der helle Ring (92), Figur 16c, bezeichnet die überlappende Fläche zwischen der Vollkreisapertur (91) und der Ringapertur (90). Der helle Ring (92) bestimmt die Gleichlichtamplitude im Bild. Nur der Teil des Beleuchtungslichts, der den Ring (92) passiert, tritt in die Objektivapertur (91) ein, (siehe auch Figur 17) weil der äußere Durchmesser der ringförmigen Kondensorapertur (90), dargestellt in Figur 16b und c größer ist als der äußere Durchmesser der Objektivapertur (91). Der Gleichlichtanteil des beleuchtenden Lichts, der auf den Ring (93) in Figur 16 fällt, durchsetzt den Beleuchtungsteil der Optik und die Probe und wird von der Objektivapertur wegen deren geringerem Durchmesser blockiert. Weil dieses Licht jedoch die Probe immer noch durchsetzt, trägt es zu den Hochfrequenzkomponenten des Bildes weiterhin bei. In Figur 17 ist die Stellung des dunklen Ringes (93) im optischen System dargestellt.

Bei dieser Auslegung kann die Helligkeit der Lichtquelle im Vergleich zu einander vollständig überlappenden Aperturen gesteigert werden. Das erhöht das Signalrauschverhältnis der Hochfrequenzanteile, ohne den dynamischen Bereich des Bildsensors (der Fernsehkamera) zu übersteuern. Diese Auslegung des faltenden Musters führt zwei wichtige Vorteile in die Mikroskopie mit Rückfaltung ein:

1. Erhöhung der Wechselwirkung zwischen Probe und Instrument durch Einführung von Struktur in den Lichtweg mit Modulationsmustern, wie voran beschrieben;

2. Anpassung der Tiefpaßcharakteristik der übertragungsfunktion der Optik, so daß das Signal-Rauschverhältnis für die hohen Frequenzen im Bild signifikant verbessert wird.

Die beschriebene Kombination von Aperturen ist ähnlich der bekannten Dunkelfeldbeleuchtung im Mikroskop. Zusammen mit dem Rückfaltungsprozeß entsteht ein völlig neues System.

Aufeinanderfolgende Rückfaltungen und verschiedene Größen von Modulationsmustern wurden erläutert. Nachfolgend wird eine spezielle Art aufeinanderfolgender Rückfaltung, nämlich ein Scanningprozeß im Frequenzbereich geschildert. Dieses neue Verfahren nach der vorliegenden Erfindung ist nützlich, wenn schnelle digitale Rückfaltung für große Datenvolumen verfügbar sind. Obwohl die Prozedur jetzt durchführbar ist, mag sie in der Zukunft wichtiger werden, weil die Rechnerkosten fallen und die Rechengeschwindigkeit wächst.

Scannen im Frequenzbereich nutzt eine ringförmige Aperturblende im Beleuchtungsstrahlengang (35), Figur 17, der Optik und sieht Mittel vor, mehrere Bilder in jeder Bildebene aufzunehmen, wobei der Ring nacheinanderfolgend verkleinert oder vergrößert wird.

Figur 20 zeigt ein Beispiel. Wie in Figur 16c sind das Modulationsmuster im Kondensor und das Modulationsmuster im Objektiv zusammen dargestellt. Figur 20a, b und c zeigen verschiedene Größen des modulierenden Musters zum Scannen im Frequenzbereich. Die Objektivpupille (91) ist eine Vollkreisapertur mit konstanter Größe. Drei Größen transparenter Ringe (Beleuchtungsring) (92) sind zusammen mit lichtundurchlässigen Flächen (94) dargestellt. Mit dünneren Ringen werden mehr als drei aufeinanderfolgende Ringe benutzt um die ganze Apertur des Objektivs abzuscannen. Wie in Figur 20c gezeigt, wird der Beleuchtungsring (92) schließlich zu einem Kreis, weil der innere Radius am Ende des Scanvorganges den Wert 0 erreicht.

In jeder der 64 Bildebenen, die vorstehend erwähnt wurden, muß jedes der drei Muster nach Figur 20a, b und c während des Fokusscannings angewandt werden. So werden im dargestellten Beispiel dreimal soviel Daten aufgenommen und rückgefaltet. Deshalb wird im Vergleich zur Anwendung nur eines Modulationsmusters zusätzliche Rechnerleistung benötigt.

Diese Methode ergibt verbesserte Auflösung und Kontrast, weil weniger Wechselwirkung zwischen Licht und Probe stattfindet. Der Bildsensor oder die vorerwähnte Fernsehkamera erhält bei jedem Wechsel der Größe des beleuchtenden Ringes (92) Information aus verschiedenen Teilen der Probe. So wird die Rückfaltung wiederum effektiver gestaltet.

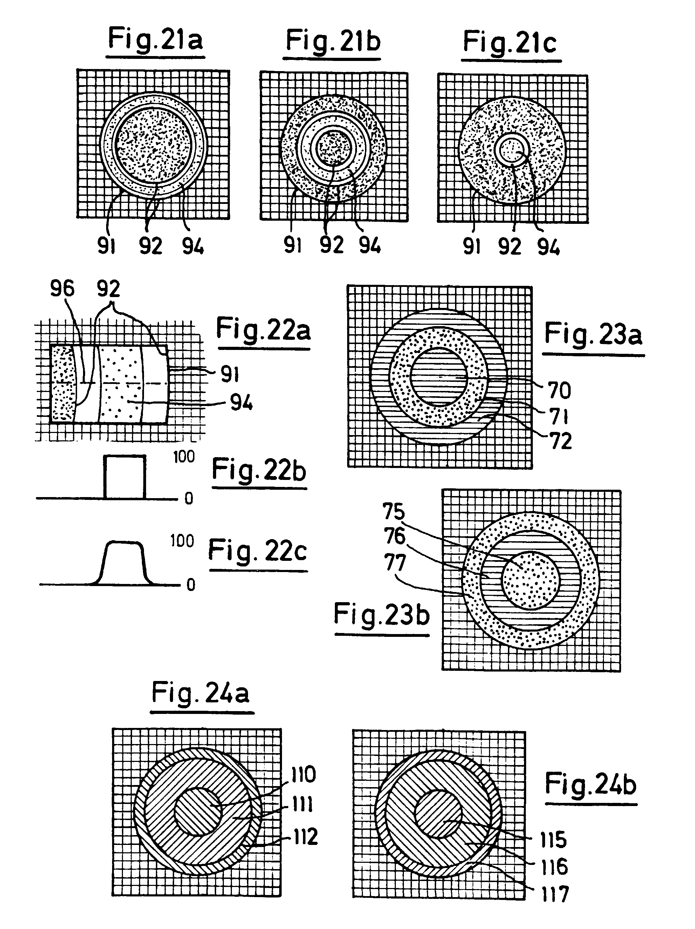

Zusätzliche Verbesserung wird erreicht, wenn nur teilweise überlappende Aperturen im Beleuchtungs- und bildgebenden Teil der Optik angewandt werden. Dies zeigt Figur 21. Die dunklen Ringe (94) sind in der Objektivaperturebene hinzugefügt worden. Diese Ringe schwächen die Tiefpaßcharakteristik der Optik, wie schon erwähnt wurde. Die 3D-übertragungsfunktion des Systems wird dadurch komplexer und die erforderliche Rechnerarbeit steigt.

Der erforderliche Rechenaufwand kann etwas gemindert werden, wenn anstelle des Transmissionsprofils nach Figur 20 apodisierte Aperturen eingesetzt werden. Um das zu demonstrieren, zeigt Figur 22a einen Sektor der Ringe nach Figur 21a. In Figur 22a bezeichnet die Kante (91) des Ringes eine kreisförmige Apertur des Objektivs. Die ringförmige Beleuchtungsapertur (92) wird teilweise durch den dunklen Ring (94) innerhalb der kreisförmigen Apertur des Objektivs blockiert. So wird ein Teil des nicht gebeugten, also des Gleichlichts, daran gehindert, den Bildsensor zu erreichen. Figur 22b zeigt die rechteckförmige Form des Absorptionsprofils des Rings (94). Die Absorption beträgt 100% über die volle Breite des Ringes. Als alternative Absorptionsverteilung des Rings (94) kann die Kurve nach Figur 22c vorgesehen werden. Die Flanke zwischen 0% Absorption und 100% Absorption wird gemäß der apodisierten Funktion des Ringes (94) geglättet, was nach dem Stande der Technik bekannt ist. Das unterdrückt einen Teil der Struktur, die vom Faltungsalgorithmus zu bewältigen ist und hilft den Rückfaltungsprozeß zu erleichtern. Auch die Stabilität des Prozesses wird verbessert.

Diese Apodisation kann auf jede der vorerwähnten Ausführungen dieser Erfindung mit dem gleichen Vorteil angewandt werden aber sie hat zwei Nachteile. Einer besteht darin, daß die Blenden aufwendiger werden, der andere darin, daß die wirksamen Aperturen kleiner werden und die Auflösung etwas verschlechtert wird.

Die geschilderten praktischen Auslegungen der Optik, Elektronik und Modulationsmuster sind Beispiele. Der Geist der Erfindung liegt in der Kombination von modulierendem Muster im Lichtweg, Bildspeicherung und rückfaltendem Computer mit Algorithmen, die angepaßt sind an das modulierende Muster, und dem Verfahren Bilder abzuspeichern, die von verschiedenen Fokusebenen gewonnen wurden. Modulierende Muster mit absorbierenden Strukturen können in vergrößernden Systemen nach der Erfindung ebenso benutzt werden, wie Muster mit phasenschiebenden Eigenschaften und/oder polarisierenden Eigenschaften. Das ist in den nachfolgenden Absätzen erläutert.

Polychromatische Strahlung und monochromatische Strahlung kann benutzt werden mit vergrößernden und abbildenden Systemen nach der Erfindung. Inkohärente Strahlung und kohärente Strahlung kann angewandt werden auf vergrößernde und abbildende Systeme nach der Erfindung. Sichtbares Licht ebenso wie jede andere Wellenlänge elektromagnetischer Strahlung, einschließlich Elektronenstrahlen, können benutzt werden mit vergrößernden und abbildenden Systemen nach der Erfindung. Ganzbildoptik mit Fernsehkamera und Systeme mit Flying Spot, Scanningtisch und Spiegelscanning können mit vergrößernden und abbildenden Systemen nach der Erfindung benutzt werden.

Figur 23 zeigt die Anwendung polarisierender Muster. Das modulierende Muster nach Figur 23a kann angeordnet sein in der Beleuchtungsaperturblende. Das Modulationsmuster Figur 23b kann angeordnet werden in der Objektivaperturblende. Der Kreis (70), der Ring (72) und der Ring (76) polarisieren das Licht in X-Richtung. Der Ring (71), der Ring (77) und der Kreis (75) polarisieren das Licht senkrecht in Y-Richtung. So kann, wie früher beschrieben, eine Minderung der Gleichlichtkomponente erreicht werden. Das Ausmaß, in dem die Gleichlichtkomponente gemindert wird, wird festgelegt durch die relative Größe der Ringe und Kreise.

Figur 24 zeigt, wie ein phasenschiebendes Muster benutzt wird. Figur 24a ist ein modulierendes Muster, das in der Beleuchtungsaperturblende angeordnet sein kann. Figur 24b ist ein modulierendes Muster für die Objektivaperturblende. Der Kreis (110), der Ring (112) und der Ring (116) schieben die Phase des Lichtes um 90°. Der Ring (111), der (115) und der Ring (117) schieben die Lichtphase um 0°. So wird eine Modulation der Lichtphase erreicht, die das Aufnahmesystem in den außerhalb des Fokus befindlichen Teilen der Probe erkennen kann.

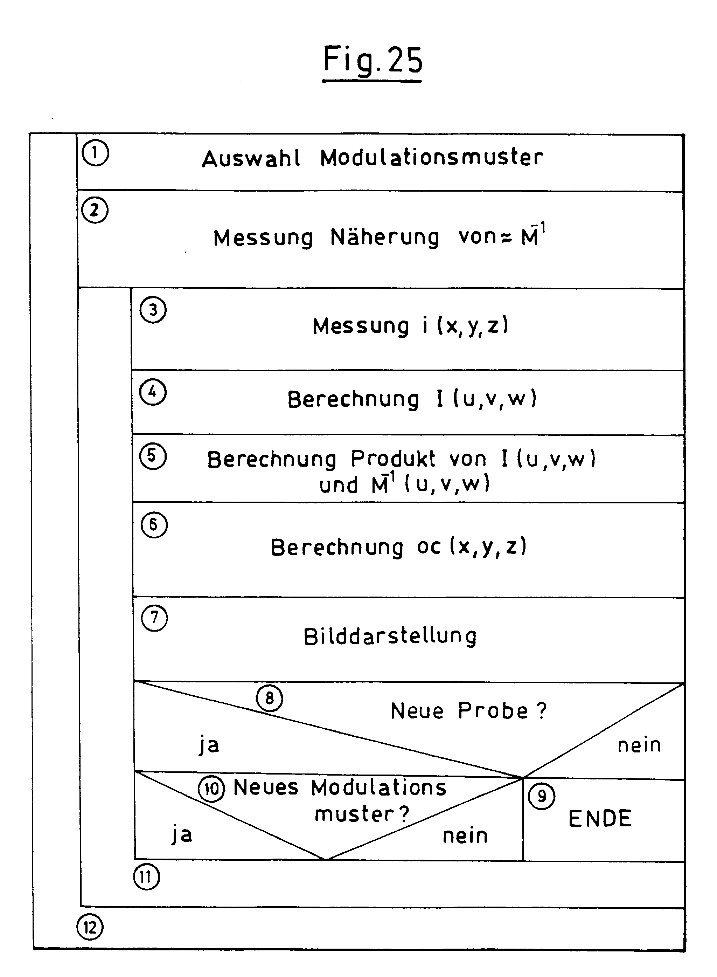

Figur 25 zeigt das Flußdiagramm eines Rechnerprogramms, ausgelegt für absorbierende Objekte. Dieses Flußdiagramm ist ähnlich den Flußdiagrammen nach Figur 18 und 19. Hier wird jedoch in Block 2 entsprechend der Wiener-Filterung eine Näherung von $M^{-1}(u,v,w)$, die die Reziproke zur Fourier-Transformierten der 3D-Impulsantwortfunktion des optischen Systems und des Modulationsmusters ist, gemessen, Diese Messung wird mit einem Pinhole oder einem kleinen Objekt, z.B. einem Zuckerstück mit einem Durchmesser von 0,2 um in Immersionsöl, als Probe durchgeführt. Das Programm endet durch Block (9), und Block (11) wiederholt Messung und Rechnung für eine neue Probe. Block (12) wiederholt das ganze Verfahren, wenn eine neue Probe und ein neues Modulationsmuster ausgewählt werden. Das Flußdiagramm benutzt eine Fourier-transformation zur Faltung. Die Probe und die Übertragungsfunktionfunktion werden gemessen durch Aufnehmen von Bildern mit der Fernsehkamera. Leerbilder werden aufgenommen und automatisch abgespeichert, um Signal-Offsets von Kamera und Optik zu kompensieren.

Da der Vorgang der Bildgebung selbst aus dem Stande der Technik wie beschrieben in M. Born und E. Wolf, Principles of Optics, Pergamon Press 1980, bekannt ist, ist es nicht nötig, den Prozeß der Bildgebung im Instrument und die zugehörigen Rechenvorgänge und die vorerwähnten Variationen im einzelnen zu beschreiben.

Während eine bevorzugte Ausführung der vorliegenden Erfindung illustriert und beschrieben wurde, sind Modifikationen und Variationen davon für den Fachmann hiermit offensichtlich geworden und es ist das Bestreben, solche Modifikationen und Variationen in den Patentansprüchen mit zu erfassen.

## Patentansprüche

1. Verfahren zur Erzeugung einer Abbildung mit Hilfe eines abbildenden Systems, das ein Mikroskop mit wenigstens einer Aperturblende im Beleuchtungs- (29A) oder im Abbildungsstrahlengang (29B), sowie einen elektronischen Bildsensor (42) und eine Einrichtung zur Bildspeicherung (51) enthält, mit folgenden Schritten:

   - Erzeugen von Strahlung zum Beleuchten des Objektes (38),
   - Aufnehmen von Bildern des Objektes (38) in verschiedenen Fokusstellungen,
   - Speichern der Bilder bei verschiedenen Fokusstellungen und 3-dimensionale Transformation der gespeicherten Bilder,
   - Rückfalten der transformierten Bilder unter Berücksichtigung der 3-dimensionalen Übertragunsfunktion des abbildenden Systems, dadurch gekennzeichnet, daß die Intensität, die Phase oder die Polarisation der Strahlung im Ortsbereich der Aperturblende (35) oder einer zugeordneten Ebene räumlich moduliert wird, und daß durch Rückfaltung mindestens ein Bild der Probe erzeugt wird, in dem die modulierte Strahlung unterdrückt ist.

2. Verfahren nach Anspruch 1, dadurch gekennzeichnet, daß es für unterschiedliche Modulationsmuster wiederholt wird.

3. Abbildendes System bestehend aus einem Mikroskop und aus Computermitteln, wobei das Mikroskop eine Lichtquelle (32) zur Erzeugung von Strahlung zur Beleuchtung eines Objektes, wenigstens eine Aperturblende im Beleuchtungs- (29A) oder im Abbildungsstrahlengang (29B), einen elektronischen Bildsensor (42) zur Aufnahme von Bildern des Objektes in verschiedenen Fokusstellungen, eine Bildspeichereinrichtung (51) zum Speichern der Bilder in den verschiedenen Fokusstellungen und ein Display (53) zur Darstellung der Abbildung aufweist und wobei die Computermittel Einrichtungen zum 3-dimensionalen Transformieren und Ruckfalten der gespeicherten Bilder unter Berücksichtigung der 3-dimensionalen Übertragungsfunktion des Systems aufweisen, dadurch gekennzeichnet, daß das Mikroskop im Ortsbereich von mindestens einer der Aperturblenden (35) oder in einer zugeordneten Ebene ein Element (36) zum räumlichen Modulieren der Intensität, der Phase oder der Polarisation der Strahlung aufweist und daß die Einrichtung zur Rückfaltung zur Erzeugung mindestens eines Bildes, in dem die Modulation unterdrückt ist, ausgebildet ist.

4. Abbildendes System nach Anspruch 3, dadurch gekennzeichnet, daß das Element (36) zum Modulieren ein räumliches Muster aus einem oder mehreren konzentrischen ringförmigen Bereichen (92, 93, 94; 100, 101) ist, wobei die ringförmigen Bereiche abwechselnd entweder unterschiedliche Absorptions-, unterschiedliche Phasen- oder unterschiedliche Polarisationseigenschaften aufweisen.

**5.** Abbildendes System nach Anspruch 4, dadurch gekennzeichnet, daß unterschiedliche Modulationsmuster (36) durch einen Motorantrieb (60) gegeneinander auswechselbar sind.

**6.** Abbildendes System nach Anspruch 3, dadurch gekennzeichnet, daß das Element (36) zum Modulieren eine ringförmige Apertur (90) im Beleuchtungsstrahlengang ist, und daß im Abbildungsstrahlengang eine Vollkreisapertur (91) angeordnet ist.

**7.** Abbildendes System nach Anspruch 6, dadurch gekennzeichnet, daß der äußere Durchmesser der ringförmigen Apertur (90) größer ist als der äußere Durchmesser der Vollkreisapertur (91).

**8.** Abbildendes System nach Anspruch 6, dadurch gekennzeichnet, daß die ringförmige Apertur mit einem von den Computermitteln gesteuerten Motor (60) veränderbar ist.

## Claims

**1.** Method for generating an image by an imaging system which comprises a microscope with at least one aperture diaphragm within the illumination beam path (29 A) or within the imaging beam path (29 B), an electronic image sensor (42) and means (51) for storing images, comprising the steps of:

- generating radiation for illuminating an object (38),
- recording of images of the object (38) with different focus adjustments,
- storing the images recorded at the different focus adjustments and performing a three dimensional transformation of the stored images,
- reconvolving the transformed images under consideration of the three dimensional transfer function of the imaging system, characterized in that the intensity, the phase or the polarisation of the radiation is spatially modulated at the location of the aperture diaphragm (35) or in a plane conjugated thereto and that by the aid of the reconvolution at least one image of the object is generated in which the modulated radiation is suppressed.

**2.** Method of claim 1, characterized in that the method is repeated for different modulation patterns.

**3.** Imaging system consisting of a microscope and a computer, wherein the microscope comprises a light source (32) for generating radiation for illuminating an object, at least one aperture diaphragm within the illuminating beam path (29 A) or within the imaging beam path (29 B), an electronic image sensor (42) for recording images of the object with different focus adjustments, an image storage (51) for storing images recorded with different focus adjustments and a display (53) for displaying images, and whereby the computer comprises means for a three dimensional transformation and reconvolution of the stored images under consideration of the three dimensional transfer function of the imaging system, characterized in that the microscope comprises, at the location of at least one of the aperture diaphragms (35) or in a plane conjugated thereto, an element (36) for spatially modulating the intensity, the phase or the polarisation of the radiation and that the means for reconvolving are designed for generating at least one image in which the modulated radiation is suppressed.

**4.** Imaging system of claim 3, characterized in that the element (36) for modulating is a spatial pattern of one or several concentric circular regions (92, 93, 94; 100, 101), whereby the circular regions alternatingly comprise different absorbing, different phase shifting or different polarising qualities.

**5.** Imaging system of claim 4, characterized in that different modulating patterns (36) can be interchanged one against the other by means of a motor drive (60).

**6.** Imaging system of claim 3, characterized in that the element (36) for modulating is a ring aperture (90) within the illuminating beam path and that within the imaging beam path a full circle aperture (91) is provided.

**7.** Imaging system of claim 6, characterized in that the outer diameter of the ring aperture (90) is larger than the outer diameter of the full circle aperture (91).

**8.** Imaging system of claim 6, characterized in that the ring aperture can be changed by a motor drive (60) controlled by the computer.

**EP 0 244 640 B1**

**Revendications**

1. Procédé destiné à générer une image à l'aide d'un système de reproduction qui comporte un microscope muni au moins d'un diaphragme d'ouverture dans le faisceau d'éclairage (29A) ou dans le faisceau de formation de l'image (29B), ainsi qu'un capteur d'image électronique (42) et un dispositif de mémorisation d'image (51), tel que son déroulement se décompose dans les phases suivantes :

   - production d'un rayonnement pour éclairer l'objet (38),
   - prise de vues de l'objet (38) mis au point dans divers plans focaux,
   - mémorisation des images obtenues aux différents réglages de focalisation et transformation des images mémorisées dans les 3 dimensions,
   - convolution inverse des images transformées, en tenant compte de la fonction de transfert tridimensionnelle du système de reproduction, caractérisé en ce que l'intensité, la phase ou la polarisation du rayonnement sont modulées spatialement dans la zone de localisation du diaphragme d'ouverture (35) ou dans un plan affecté à cet effet et qu'au moins une image de l'échantillon est générée par convolution inverse, sur laquelle le rayonnement modulé est supprimé.

2. Procédé selon la revendication 1, caractérisé en ce qu'il est répété pour différents modèles de modulation.

3. Système de reproduction de l'image qui comprend un microscope et des moyens assistés par ordinateur, tel que le microscope possède une source de lumière (32) destinée à produire le rayonnement d'éclairage d'un objet, au moins un diaphragme d'ouverture dans le faisceau d'éclairage (29A) ou dans le faisceau de formation de l'image (29B), ainsi qu'un capteur d'image électronique (42) prévu pour prendre des vues de l'objet dans divers plans focaux, un dispositif de mémorisation d'image (51) pour enregistrer les clichés obtenus aux différents réglages de focalisation et un afficheur visuel (53) pour présenter l'image restituée et tel que les moyens assistés par ordinateur comprennent des dispositifs voués à la transformation et à la convolution inverse des images mémorisées en considération de la fonction de transfert tridimensionnelle du système, caractérisé en ce que le microscope est pourvu d'un élément (36) de modulation spatiale de l'intensité, de la phase ou de la polarisation du rayonnement dans la zone de localisation d'un des diaphragmes d'ouverture (35) ou dans un plan affecté à cet effet et que le dispositif de convolution inverse pour générer au moins une image où la modulation est supprimée.

4. Système de reproduction de l'image selon la revendication 3, caractérisé en ce que l'élément (36) destiné à moduler un modèle spatial est constitué d'une ou de plusieurs zones annulaires concentriques (92, 93, 94; 101, 101), tel que ces zones annulaires présentent alternativement différentes propriétés d'absorption, de phase ou de polarisation.

5. Système de reproduction de l'image selon la revendication 4, caractérisé en ce que divers modèles de modulation (36) peuvent être interchangés par un actionneur motorisé (60).

6. Système de reproduction de l'image selon la revendication 3, caractérisé en ce que l'élément (36) destiné à moduler forme une ouverture annulaire (90) dans le faisceau d'éclairage et qu'une ouverture en cercle entier (91) est disposée dans le faisceau de formation de l'image.

7. Système de reproduction de l'image selon la revendication 6, caractérisé en ce que le diamètre extérieur de l'ouverture annulaire (90) est supérieur au diamètre extérieur de l'ouverture en cercle plein (91).

8. Système de reproduction de l'image selon la revendication 6, caractérisé en ce que l'ouverture annulaire (90) est modifiable à l'aide d'un moteur commandé par des moyens assistés par ordinateur.

13

Fig.1

Fig.2

Fig.3

Fig.4

Fig.5

Fig.6

Fig.7

Fig.8

Fig.9

## Fig.10

101    100

## Fig.11

70    71

←hell→
dunkel←

## Fig.12

80    81    82    83

## Fig.13

200

## Fig.14

36

## Fig.15

30
41
38
42
32    31
36
33    34    35    37    39    40
60    62

Fig.16a

Fig.16b

Fig.16c

Fig.17

Fig.20a

Fig.20b

Fig.20c

# Fig.18

① Auswahl Modulationsmuster

② Berechnung $M^{-1}$

③ Messung i (x, y, z)

④ Berechnung I (u, v, w)

⑤ Berechnung Produkt von I (u, v, w) und $M^{-1}$ (u, v, w)

⑥ Berechnung oc (x, y, z)

⑦ Bilddarstellung

⑧ Neue Probe ?
ja          nein

⑩ Neues Modulations muster?
ja          nein          ⑨ ENDE

⑪

⑫

# Fig.19

① Auswahl Modulationsmuster

② Berechnung inverse Filterfunktion

③ Messung i (x,y,z)

④ Faltung i (x,y,z) mit inverser Filterfunktion

⑤ Bilddarstellung

⑥ Neue Probe?

ja      nein

⑧ Neues Modulations muster?

ja      nein

⑦ ENDE

⑨

⑩

Fig.21a

Fig.21b

Fig.21c

Fig.22a

Fig.22b

Fig.22c

Fig.23a

Fig.23b

Fig.24a

Fig.24b

# Fig. 25

| | |
|---|---|
| ① | Auswahl Modulationsmuster |
| ② | Messung Näherung von $\approx \bar{M}^1$ |

| | | |
|---|---|---|
| | ③ | Messung i (x, y, z) |
| | ④ | Berechnung I (u, v, w) |
| | ⑤ | Berechnung Produkt von I (u, v, w) und $\bar{M}^1$ (u, v, w) |
| | ⑥ | Berechnung oc (x, y, z) |
| | ⑦ | Bilddarstellung |

⑧ Neue Probe ?

ja        nein

⑩ Neues Modulations muster?        ⑨ ENDE

ja        nein

⑪

⑫